# EUROPEAN PATENT SPECIFICATION

(11) **EP 2 819 057 B1**
(45) Date of publication and mention of the grant of the patent: **09.08.2017**
(21) Application number: 13173426.1
(22) Date of filing: 24.06.2013
(51) Int. Cl.: G06F 21/62, H04L 29/06

(54) **Data processing system, method of initializing a data processing system, and computer program product**
Datenverarbeitungssystem, Verfahren zur Initialisierung eines Datenverarbeitungssystems und Computerprogrammprodukt
Système de traitement de données, procédé d'initialisation d'un système de traitement de données et produit de programme informatique

(43) Date of publication of application: 31.12.2014
(73) Proprietor: NXP B.V., 5656 AG Eindhoven (NL)
(72) Inventor: van Roermund, Timotheus Arthur, 5656 AG Eindhoven (NL); Moerman, Cornelis Marinus, 5656 AG Eindhoven (NL); Rombouts, Peter Maria Franciscus, 5656 AG Eindhoven (NL)
(74) Representative: Krott, Michel

(56) References cited:
- EP-A2- 0 407 060
- US-A1- 2002 144 117
- US-A1- 2005 234 907
- US-A1- 2010 146 295
- US-B1- 6 449 720
- SANDHU R S ET AL: "ACCESS CONTROL: PRINCIPLES AND PRACTICE", IEEE COMMUNICATIONS MAGAZINE, IEEE SERVICE CENTER, PISCATAWAY, US, vol. 32, no. 9, 1 September 1994 (1994-09-01), pages 40-48, XP000476554, ISSN: 0163-6804, DOI: 10.1109/35.312842
- SINCLAIR S ET AL: "PorKI: Making User PKI Safe on Machines of Heterogeneous Trustworthiness", COMPUTER SECURITY APPLICATIONS CONFERENCE, 21ST ANNUAL TUCSON, AZ, USA 05-09 DEC. 2005, PISCATAWAY, NJ, USA,IEEE, 5 December 2005 (2005-12-05), pages 419-430, XP010869960, DOI: 10.1109/CSAC.2005.43 ISBN: 978-0-7695-2461-0
- Biba: "INTEGRITY CONSIDERATIONS FOR SECURE COMPUTER SYSTEMS", , 1 April 1977 (1977-04-01), XP055114406, Retrieved from the Internet: URL:http://www.dtic.mil/cgi-bin/GetTRDoc?L ocation=U2&doc=GetTRDoc.pdf&AD=ADA039324 [retrieved on 2014-04-16]

## Description

### FIELD

The present disclosure relates to a data processing system, to a method of initializing a data processing system, and to a computer program product.

### BACKGROUND

Nowadays, security plays an important role in many technological applications. For example, in a so-called intelligent transportation system (ITS) a large amount of sensitive data may have to be exchanged. Some applications require dedicated hardware solutions for cryptographic operations, because the security of a generic processor with software implementing the cryptographic operations may be breached to easily. Therefore, so-called secure elements have been introduced. A "secure element" may be defined as a piece of hardware which enables secure storage of secrets (e.g. keys) as well as cryptographic operations (e.g. AES encryption) on externally supplied data using the securely stored secrets.

Patent application US2005234907 A1 specifies a system with a plurality of security levels for storing broadcast content related meta data and associating the meta data with an utilization condition corresponding to security level at which the meta data may be stored.

Document "Access control, principles and practice", EPO reference XP XP000476554, discloses commonly known mandatory access control policies utilizing security level information associated with subjects and objects.

Patent application US2002144117 A1 specifies a secure element comprising an exportable key and rules governing its exportation.

Patent document US6449720 B1 discloses a cryptographic control unit suitable to be used as a medium security level since it can send and receive a context, comprising e.g. keys, of a cryptographic program.

Document "PorKI: making User PKI Safe on Machines of Heterogenous Trustworthiness", EPO reference XP010869960, provides a solution to a portable key problem in PKI environment through the usage of temporary keypairs, proxy certificates and XCACML policy statements that limit the key usage to the trustworthiness level of a workstation receiving the temporary key pair and proxy certificate.

Patent application EP0407060 A2 teaches as background information the usage of two security labels for secrecy and integrity classification.

Document "Integrity considerations for secure compute systems", EPO reference XP055114406, discloses an object low-water mark audit policy wherein a "corruption level" of objects is further logged or audited (but not enforced) to a corruption-level label.

Patent application US2010146295 A1 teaches tagging data by a secure processor with a history of used algorithms, that correspond to security levels since algorithms have different security properties.

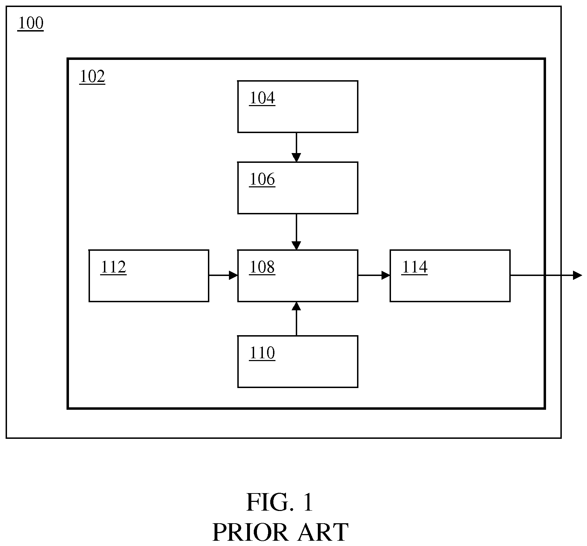

**Fig. 1** shows a high-level functional overview of a conventional secure element. A secure element 100 typically contains a programmable microcontroller 108, a number of crypto accelerators 110 (for example 3DES, AES, RSA, ECC) and a storage unit 112, i.e. a non-volatile memory. Furthermore, the secure element 100 may contain tamper sensors 104 and a tamper detection unit 106, which are arranged to signal a detected tampering operation to the microcontroller 108, and a communication unit 114 which is arranged to enable exchange of data with other, external devices. The protection of the components of the secure element 100 may commonly be referred to as tamper avoidance measures 102.

A secure element 100 typically includes a number of expensive countermeasures for tamper detection and tamper avoidance against a wide range of attacks. Secure elements may offer a very high level of protection against such attacks. For example, NXP Semiconductors has produced a secure element called "SmartMX2" which is Common Criteria EAL 6+ certified. An EAL6+ security evaluation against a certain (e.g. smart card) Protection Profile in accordance with the Common Criteria certification process requires a proof of the security policy. Secure elements are typically used in financial or governmental applications. For example, banking cards and electronic passports are normally implemented on secure elements.

As mentioned, the security level of secure elements is very high. However, their performance level is typically not so high. For example, the performance level may be as low as a few AES or RSA operations per second. In some application areas, for example banking and e-government, this lack of performance does not present a serious problem. Banking and governmental applications typically do not require a very high performance. However, other applications may require a higher performance level. If these performance requirements are hard, i.e. if no trade-off with the security level is possible, then there is no other solution than to create a secure element with higher performance or to use multiple secure elements in parallel. The complexity - and as a consequence the cost - of such high-performance, highly-secure solutions is rather high for several reasons. First, the silicon area for a security-hardened implementation of a crypto coprocessor can, for example, easily be four times higher than for a non-hardened solution. Furthermore, a redesign may require a lengthy and costly certification process, i.e. a security evaluation process. As a result, there is typically a design-time trade-off between performance and security.

There are also certain applications which only occasionally require a higher performance level, i.e. a higher throughput and/or a lower latency, and that could make dynamic, run-time trade-offs between the security level and the performance. For example, the latency requirements for a certain cryptographic operation may be low in most, noncritical cases, but they may have to be increased during some safety-critical situations. Simply creating a high-performance, highly-secure piece of hardware for such applications would be too complex and too costly. As an alternative, one could create a solution where performance vs. security trade-offs are made at design time. For example, a designer could decide to always perform a certain cryptographic function outside of the secure element, in order to increase the performance of this operation. However, that would mean that, among others, sensitive (secret) material - such as keys - which is needed for these operations, would reside outside the secure element. In such a solution, the security level is continuously lowered.

In view thereof, there is a need to find lower-complexity solutions that allow for making more flexible trade-offs between security and performance. More specifically, there is a need to find lower-complexity solutions that allow for deciding at run-time whether a cryptographic function should be performed inside a secure element, when the performance requirements are lower, or temporarily outside the secure element, when the performance requirements are higher. Also, such a temporary relaxation of the security level should be performed in such a way that it does not negatively impact the security level of the system after said relaxation has ended.

### SUMMARY

Accordingly, it is an object of the present disclosure to provide a low-complexity solution that allows for making more flexible trade-offs between security and performance.

First, a data processing system is conceived, which comprises at least two security levels and key material stored at a specific one of said security levels, wherein the key material is tagged with a minimum security level at which the key material may be stored.

According to an illustrative embodiment, the key material is tagged by means of an attribute attached to or comprised in said key material, and said attribute has a value that is indicative of the minimum security level at which the key material may be stored, and wherein one of the security levels, in particular the highest security level, is implemented as a tamper-resistant secure element.

According to a further illustrative embodiment, one of the security levels, in particular a medium security level, is implemented as a high-performance crypto accelerator.

According to the illustrative embodiment, the data processing system is arranged to move, at least temporarily, the key material to a security level that is lower than the security level at which the key material is stored, wherein the security level to which the key material is temporarily moved is equal to or higher than the minimum security level.

According to a further illustrative embodiment, the key material is further tagged with an internal security level, and said internal security level is indicative of the lowest security level at which the key material has resided.

According to a further illustrative embodiment, the key material is further tagged with a list that is indicative of a history of security levels at which the key material has resided.

According to a further illustrative embodiment, the data processing system is arranged to create temporary key material that may be exchanged and verified using key material as defined in any preceding claim.

According to a further illustrative embodiment, the data processing system is comprised in an intelligent transportation system.

### DESCRIPTION OF DRAWINGS

The embodiments will be described in more detail with reference to the appended drawings, in which:
Fig. 1 shows a high-level functional overview of a conventional secure element;
Fig. 2 shows a data processing system with different security levels in accordance with an illustrative embodiment;
Fig. 3 shows key material entering a data processing system as shown in Fig. 2;
Fig. 4 shows an extension of a certificate chain in accordance with an illustrative embodiment;
Fig. 5A shows a vehicle comprising an implementation of a data processing system in accordance with an illustrative embodiment;
Fig. 5B shows a block diagram of a data processing system as shown in Fig. 5A.

### DESCRIPTION OF EMBODIMENTS

The invention is defined as specified in the appended independent claim.

In accordance with the present disclosure, a dynamic trade-off is enabled between security and performance in data processing systems in which sensitive data are processed, thereby reducing the complexity and cost of these systems. Said trade-off is enabled by tagging key material usable for cryptographic operations on said sensitive data with a required minimum security level. Optionally, the data processing system may create temporary key material that can be exchanged and verified using the long-term secure key material.

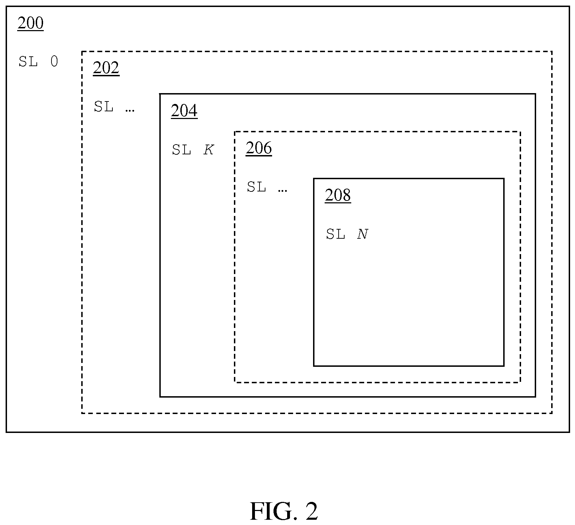

**Fig. 2** shows a data processing system with different security levels in accordance with an illustrative embodiment. In this example, the data processing system comprises a plurality of security levels 200, 202, 204, 206, 208. The security levels 202 and 206 may be absent or be split further in multiple security levels; therefore the security levels 202 and 206 are shown as dotted lines. Each security level provides for storage of secret material, e.g. key material, and for cryptographic processing using said secret material. Each security level may be implemented in hardware, software or a specific combination of hardware and software. For example, the highest security level 208 (SL *N*) may be implemented in a secure element of the kind set forth above. The data processing system has *N* different security levels, where *N* is an integer value.

The use of multiple security levels enables making dynamic, run-time trade-offs between security and performance. In this example, the lowest security level 200 (SL 0) is of lower complexity than the other security levels. The lowest security level 200 is therefore cheaper, even at high performance. The highest security level 208 (SL *N*) is of higher complexity than the other security levels. Therefore, the highest security level 208 is more expensive, in particular if it still needs to have a reasonable level of performance.

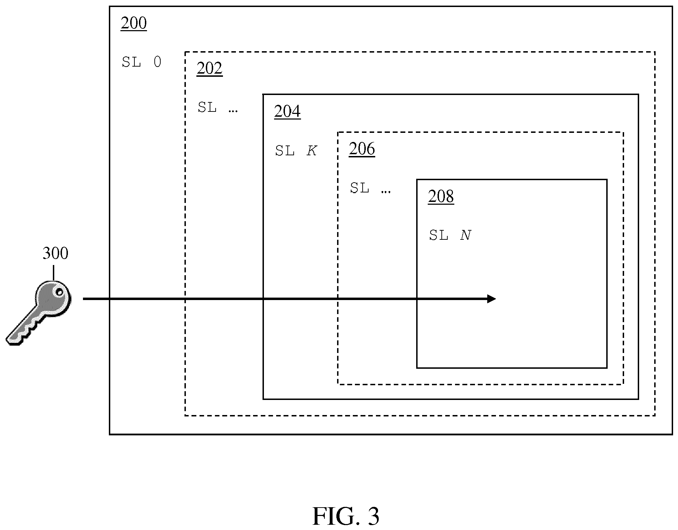

**Fig. 3** shows key material entering a data processing system as shown in Fig. 2. At some point in time, the data processing system is fed with new key material 300. This insertion of key material 300 into the data processing system may be done at production time, but also at a later moment in time, for example at scheduled maintenance intervals. It should be noted that techniques for entering key material into a data processing system are known per se; the exact way in which the key material 300 is inserted into the system is beyond the scope of the present disclosure. For example, such insertion may be carried out using a secured, controlled environment. In Fig. 3, the key material 300 is inserted into the highest security level 208.

The data processing system may be associated with one or more associated systems. In the present disclosure, the term "associated system" is defined as an external system that exchanges data, which has been protected using the same or corresponding key material, with the data processing system. For example, if the data processing system is a secure data processing system in a first vehicle, an associated system may for example be a similar secure data processing system in second vehicle, that communicates with the secure data processing system in the first vehicle via an ITS connection. Furthermore, the term "protected" as used herein means, for example, that the integrity of the data has been protected - using message authentication codes (MACs) or signatures - or that the confidentiality of the data has been protected - using encryption algorithms. The skilled person will appreciate that other techniques for protecting data may also be conceived.

As mentioned above, the key material 300 is tagged with a required minimum security level. In accordance with the present disclosure, a tag may consist of an attribute (minimum-SL attribute) which may be attached to the key material by the originator (generator) of the key material. For example, if the minimum-SL attribute for the key material 300 in Fig. 3 has a value corresponding to service level SL *M* (not shown), with *K* ≤ *M* ≤ *N,* then the key material 300 must be stored at level *M* or higher. In general, the safest option is to store the key material 300 initially in the highest security level 208 (SL *N*).

In the case of asymmetric or public-key cryptography, the key material 300 may for example consist of a secret (private) key plus a certificate containing the associated non-secret (public) key and a system identifier. The certificate may additionally contain the minimum-SL attribute, which prescribes the minimum service level at which the key may be used. When the key material 300 is used, associated systems can verify the certificate (and thus the minimum-SL attribute) using a so-called public-key infrastructure (PKI), provided that they have access to (at least) the root certificate of that chain. Thereby, associated systems know the security level (or trust level) of the key material 300.

In the case of symmetric cryptography, the key material 300 may for example consist of tuples containing a secret key and the corresponding minimum-SL attribute. In this case, it is assumed that associated systems already know the minimum-SL attribute for the key material 300, because they also need to have obtained a copy of the same key material.

In operation, a first dynamic trade-off may be realized by moving the key material 300 to a service level that is lower than the highest service level 208, but that is still equal to or higher than the service level corresponding to the value of the minimum-SL attribute of the key material 300. Thus, the system may decide at run-time to move, at least temporarily, some of the key material 300 to lower security levels, for example because that part of the system has a higher performance level. This move has no implication for the associated systems, because the requirement of the minimum service level for the key material 300 is still satisfied. It only has the implication that the additional protection level as offered by the higher security levels in the system is temporarily removed.

As an extension, the system may also maintain an additional attribute for the key material: the internal security level (ISL). Initially, the value of the ISL attribute is equal to the value of the minimum-SL attribute. If the key material 300 is moved to a security level which is lower than its current security level, then the value of the ISL attribute will be lowered to a value corresponding to said lower security level. If the key material 300 is moved back to a higher security level, then the value of the ISL attribute will not be changed. Thus, the value of the ISL attribute reflects the lowest security level at which the key material 300 has resided. Thereby, the system keeps track of which keys have the lowest chance of being compromised (by hackers) and which keys have a slightly higher chance of having been compromised. This knowledge may for example be used to shorten the lifetime of a key that has been used at a lower security level. This administration may also be extended further, for example by storing a list of security levels that are equal to or higher than the value of the minimum-SL attribute of the key material and - for each of these security levels - the period that the key material 300 has resided at the respective security level.

Furthermore, a second dynamic trade-off may be realized by creating temporary key material that can be used in service levels that are lower than the service level corresponding to the value of the minimum-SL attribute of the (original) key material 300.

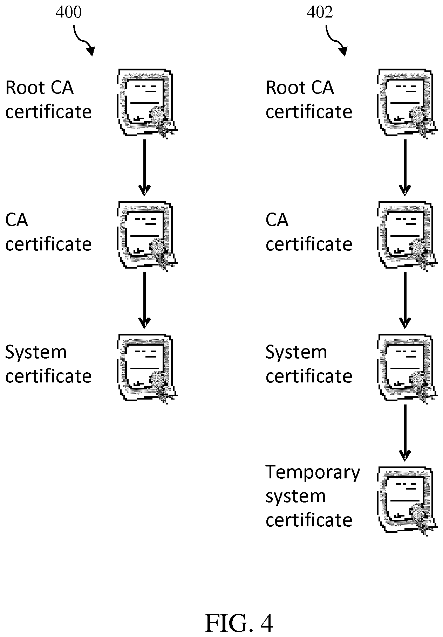

In the case of asymmetric or public-key cryptography, the temporary key material may for example consist of a temporary secret (private) key and a certificate containing the associated temporary non-secret (public) key and a system identifier. Again, the certificate may additionally contain the minimum-SL attribute, which prescribes the minimum service level at which the temporary key may be used. The certificate itself may in this case be signed using a secret (private) key of the original key material 300, and associated systems can verify the integrity and authenticity of the certificate (and thereby of the temporary key material) using a certificate of the original key material 300. In fact, the system has then extended the certificate chain by one node; it has become both a certificate authority (CA) which uses the original key material 300 and an end node which uses the temporary key material. This is shown in **Fig. 4****,** which illustrates an extension of a certificate chain in accordance with an illustrative embodiment. The original certificate chain 400 is effectively extended with a temporary system certificate, resulting in an extended certificate chain 402.

In the case of symmetric cryptography, the temporary key material may for example consist of tuples containing a secret key and the corresponding minimum-SL attribute. This temporary key material may for example be provided securely to associated systems by encrypting it - using the original key material 300 - before exchanging it with the associated systems.

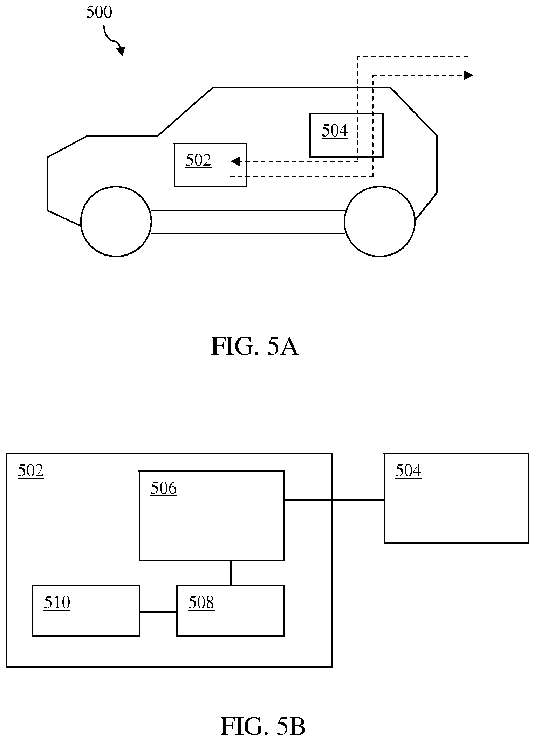

**Fig. 5A** shows a vehicle comprising an implementation of a data processing system in accordance with an illustrative embodiment. In this example, the vehicle 500 is equipped with said data processing system 502 and with an ITS communication unit 504. **Fig. 5B** shows a block diagram of the data processing system 502 as shown in Fig. 5A. The data processing system 502 comprises a microcontroller 506, a so-called crypto accelerator 508 and a secure element 510.

An example of a data processing system 502 of the kind set forth is a security subsystem for intelligent transportation systems, or more specifically 802.11p-based car-to-car communication systems for, among others, safety use cases. In particular, a hybrid security subsystem may be conceived which comprises both a secure element 510, that has a high security level, and a crypto accelerator 508, that has a lower security level but a relatively high performance level. The secure element 510 may, for example, be embodied as a SmartMX2-chip produced by NXP Semiconductors. The SmartMX2-chip 510, which is Common Criteria EAL6+ certified, may store key material which has high security level requirements and may use this key material to sign outgoing messages. In addition to the SmartMX2-chip 510, the system 502 comprises a high-performance crypto accelerator 508 with modest security level, which may be used to verify incoming safety messages at high rates.

Optionally, the same crypto accelerator 508 may be used for signature generation - using the secret key material stored in the SmartMX2-chip 510 - in safety-critical cases, in order to decrease the system latency in said cases. Then, the secret key material may temporarily move from the SmartMX2-chip 510 to the crypto accelerator 508. This can either be done by generating an intermediate key, or by using one of the set of pseudo-identity keys which is then flagged as being potentially tainted, and thus as not to be used in future critical operations.

The skilled person will appreciate that the data processing system 502 may also be used to advantage in other applications and use cases. In other words, the application and use of the data processing system 502 are not limited to intelligent transportation systems.

Finally, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

The above-mentioned embodiments are merely illustrative and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The features in a claim may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: secure element
- 102: tamper avoidance measures
- 104: tamper sensors
- 106: tamper detection unit
- 108: microcontroller
- 110: crypto accelerators
- 112: storage unit
- 114: communication unit
- 200: security level
- 202: security level
- 204: security level
- 206: security level
- 208: security level
- 300: key material
- 400: original certificate chain
- 402: extended certificate chain
- 500: vehicle
- 502: data processing system
- 504: ITS communication unit
- 506: microcontroller
- 508: crypto accelerator
- 510: secure element

## Claims

1. A data processing system comprising:
- at least two security levels, each security level providing for storage of key material and for cryptographic processing using said key material, and
- key material stored at a specific one of said security levels,
wherein the key material is tagged with a minimum security level at which the key material may be stored,
wherein the highest one of the security levels is implemented as a tamper-resistant secure element,
the data processing system being arranged to move, at least temporarily, the key material to a security level that is lower than the security level at which the key material is stored, wherein the security level to which the key material is temporarily moved is equal to or higher than the minimum security level.

2. A data processing system as claimed in claim 1,
wherein the key material is tagged by means of an attribute attached to or comprised in said key material, and
wherein said attribute has a value that is indicative of the minimum security level at which the key material may be stored.

3. A data processing system as claimed in any preceding claim,
wherein one of the security levels, in particular a medium security level, is implemented as a high-performance crypto accelerator.

4. A data processing system as claimed in any preceding claim,
wherein the key material is further tagged with an internal security level, and
wherein said internal security level is indicative of the lowest security level at which the key material has resided.

5. A data processing system as claimed in any preceding claim,
wherein the key material is further tagged with a list that is indicative of a history of security levels at which the key material has resided.

6. A data processing system as claimed in any preceding claim,
being arranged to create temporary key material that may be exchanged and verified using key material as defined in any preceding claim.

7. An intelligent transportation system comprising a data processing system as claimed in any preceding claim.

## Patentansprüche

1. Ein Datenverarbeitungssystem aufweisend:
wenigstens zwei Sicherheitsniveaus, wobei jedes Sicherheitsniveau für ein Speichern von Schlüsselmaterial und für eine kryptographische Verarbeitung, unter Verwendung von dem Schlüsselmaterial, sorgt, und
Schlüsselmaterial, das gespeichert ist an einem spezifischen von den Sicherheitsniveaus, wobei das Schlüsselmaterial bezeichnet ist mit einem Minimum Sicherheitsniveau, bei welchem das Schlüsselmaterial gespeichert werden kann,
wobei das höchste von den Sicherheitsniveaus implementiert ist als ein tamper-resistentes Sicherheitselement,
das Datenverarbeitungssystem ausgebildet ist, wenigstens zeitweise das Schlüsselmaterial zu einem Sicherheitsniveau zu bewegen, das niedriger ist als das Sicherheitsniveau, bei welchem das Schlüsselmaterial gespeichert ist, wobei das Sicherheitsniveau, zu welchem das Schlüsselmaterial zeitweise bewegt wird gleich oder höher als das Minimum Sicherheitsniveau ist.

2. Ein Datenverarbeitungssystem gemäß Anspruch 1,
wobei das Schlüsselmaterial bezeichnet ist mittels eines Attributes, das angeheftet ist an oder umfasst ist in dem Schlüsselmaterial, und
wobei das Attribut einen Wert hat, der indikativ ist für das Minimum Sicherheitsniveau, bei welchem das Schlüsselmaterial gespeichert werden kann.

3. Ein Datenverarbeitungssystem gemäß einem der vorhergehenden Ansprüche,
wobei eines von den Sicherheitsniveaus, insbesondere ein mittleres Sicherheitsniveau, implementiert ist als ein Hochleistung Crypo Accelerator.

4. Ein Datenverarbeitungssystem gemäß einem der vorhergehenden Ansprüche,
wobei das Schlüsselmaterial weiter bezeichnet ist mit einem internen Sicherheitsniveau, und
wobei das interne Sicherheitsniveau indikativ ist für das niedrigste Sicherheitsniveau, bei welchem das Schlüsselmaterial gelegen hat.

5. Ein Datenverarbeitungssystem gemäß einem der vorhergehenden Ansprüche,
wobei das Schlüsselmaterial weiter bezeichnet ist mit einer Liste, die indikativ ist für eine Historie von Sicherheitsniveaus, bei welchen das Schlüsselmaterial gelegen hat.

6. Ein Datenverarbeitungssystem gemäß einem der vorhergehenden Ansprüche,
das ausgebildet ist zum Erzeugen von temporärem Schlüsselmaterial, das ausgetauscht und verifiziert werden kann durch Verwenden von Schlüsselmaterial, wie gemäß einem der vorhergehenden Ansprüche definiert.

7. Ein intelligentes Transportsystem aufweisend ein Datenverarbeitungssystem wie gemäß einem der vorhergehenden Ansprüche beansprucht.

## Revendications

1. Système de traitement de données comprenant :
- au moins deux niveaux de sécurité, chaque niveau de sécurité permettant la mémorisation d'informations de clé et le traitement cryptographique au moyen desdites informations de clé, et
- des informations de clé mémorisées à un niveau spécifique desdits niveaux de sécurité,
dans lequel les informations de clé sont balisées avec un niveau de sécurité minimum auquel les informations de clé peuvent être mémorisées,
dans lequel le plus haut niveau des niveaux de sécurité est mis en oeuvre sous forme d'éléments sécurisés résistant à la fraude,
le système de traitement de données étant agencé pour déplacer, au moins temporairement, les informations de clé à un niveau de sécurité inférieur au niveau de sécurité auquel les informations de clé sont mémorisées, dans lequel le niveau de sécurité auquel les informations de clé sont temporairement déplacées est égal ou supérieur au niveau de sécurité minimum.

2. Système de traitement de données selon la revendication 1,
dans lequel les informations de clé sont balisées au moyen d'un attribut attaché auxdites informations de clé ou compris dans celles-ci, et dans lequel ledit attribut a une valeur indicative du niveau de sécurité minimum auquel les informations de clé peuvent être mémorisées.

3. Système de traitement de données selon l'une quelconque des revendications précédentes,
dans lequel l'un des niveaux de sécurité, en particulier un niveau de sécurité moyen, est mis en oeuvre sous forme de crypto-accélérateur de haute performance.

4. Système de traitement de données selon l'une quelconque des revendications précédentes,
dans lequel les informations de clé sont balisées en outre avec un niveau de sécurité interne, et
dans lequel le niveau de sécurité interne est indicatif du plus bas niveau de sécurité auquel les informations de clé ont été placées.

5. Système de traitement de données selon l'une quelconque des revendications précédentes,
dans lequel les informations de clé sont balisées en outre avec une liste indicative d'un historique de niveaux de sécurité auxquels les informations de clé ont été placées.

6. Système de traitement de données selon l'une quelconque des revendications précédentes,
agencé pour créer des informations de clé temporaires qui peuvent être échangées et vérifiées au moyen d'informations de clé définies selon l'une quelconque des revendications précédentes.

7. Système de transport intelligent comprenant un système de traitement de données selon l'une quelconque des revendications précédentes.
